Europäisches Patentamt

European Patent Office

Office européen des brevets

(19)

(11) Numéro de publication: **0 303 609**
**B1**

(12) **FASCICULE DE BREVET EUROPEEN**

(45) Date de publication du fascicule du brevet: **16.01.91**

(51) Int. Cl.⁵: **G 01 D 3/04, G 01 D 5/16**

(21) Numéro de dépôt: **87902545.0**

(22) Date de dépôt: **16.04.87**

(86) Numéro de dépôt international:
**PCT/FR87/00124**

(87) Numéro de publication internationale:
**WO 87/06688 05.11.87 Gazette 87/24**

(54) **PROCEDE DE COMPENSATION EN TEMPERATURE DE LA MESURE REALISEE PAR UN CAPTEUR MAGNETIQUE.**

(30) Priorité: **21.04.86 FR 8605915**

(43) Date de publication de la demande:
**22.02.89 Bulletin 89/08**

(45) Mention de la délivrance du brevet:
**16.01.91 Bulletin 91/03**

(84) Etats contractants désignés:
**AT BE CH DE GB IT LI LU NL SE**

(56) Documents cités:
**DE-B-1 287 805**
**US-A-3 681 669**

(73) Titulaire: **SCHRADER S.A.**
**48, rue de Salins**
**F-25300 Pontarlier (FR)**

(72) Inventeur: **BADOZ, Jean-Marie**
**42, rue de la Chaussée**
**F-25300 Doubs (FR)**

(74) Mandataire: **Moinas, Michel**
**Cabinet Michel Moinas 13 Chemin du Levant**
**F-01210 Ferney-Voltaire (FR)**

Courier Press, Leamington Spa, England.

## Description

La présente invention se rapporte à un procédé de compensation en température de la mesure réalisée par un capteur magnétique, notamment un capteur magnéto-résistif, ce capteur étant influencé par un champ magnétique placé sur un plateau tournant ou rectiligne à mouvement cyclique.

On sait que les capteurs magnétiques sont ces capteurs qui délivrent un signal de sortie variable avec le champ magnétique qu'ils subissent. Le champ magnétique à son tour peut être un champ dont la variation est liée à un paramètre extérieur, en sorte que le capteur peut délivrer un signal dépendant de ce paramètre extérieur et en reflètant les variations.

Ainsi, à titre d'exemple, le champ magnétique peut dépendre de la position d'un aimant permanent ou d'un électro-aimant et le capteur délivrera un signal dont la valeur va précisément dépendre de cette position.

Parmi les capteurs magnétiques, on peut citer le capteur Hall ou le capteur magnéto-résistif, qui délivre un signal électrique, étant entendu que le procédé pourra s'appliquer, mutato mutandis, avec n'importe quel type de capteurs magnétiques/analogiques.

L'ennui de ce type de capteurs c'est qu'ils dérivent fortement avec la température, en sorte que le signal qu'ils génèrent est fonction à la fois du paramètre qu'on veut mesurer et de la température d'ambiance du capteur.

Ajoutons enfin que ce type de capteurs présente une zone de linéarité, c'est-à-dire une zone où le signal délivré varie linéairement avec la grandeur à mesurer.

One peut songer à compenser les dérives en température de façon électronique, mais on comprendra vite que, même en restant dans la zone de linéarité, une électronique relativement compliquée devra être utilisée, ce qui n'est pas sans incidence sur le coût du capteur, ni sur sa tenue et durée de vie si celui-ci doit être placé dans des environnements difficiles (vibrations, pollution, etc.).

Le document DE—B—1 287 805 divulgue un dispositif de lecture de la position d'une réglette mobile en translation et passant au milieu d'un entrefer transversal. Le premier circuit magnétique 5, 7, 10 et 11 comportant l'entrefer où se déplace la réglette est complété par deux aimants 1, 2 générant le flux magnétique et une paire de capteurs magnétiques identiques dits "de mesure". Pour effectuer une compensation en température, il est prévu un second circuit magnétique 26, 28 complété par deux aimants 3, 4 et une seconde paire de capteurs identiques, ce second circuit étant maintenu à la même température que le premier.

La présente invention vise précisément à compenser en température la mesure réalisée par un capteur magnétique, par des moyens mécaniques uniquement, sans faire appel à une quelconque électronique de compensation. Cette compensation s'obtient selon l'invention lorsque le champ magnétique mesuré est vu de façon cyclique par le capteur.

Selon l'invention en effet, on fait le rapport deux à deux et consécutivement des signaux délivrés par le capteur, respectivement lorsqu'il subit le champ magnétique à mesurer et par ce même capteur lorsqu'il subit un champ magnétique de référence; ce rapport K ci-dessous reflètant la mesure est indépendant des variations de température, les deux signaux variants dans les mêmes proportions en fonction de la température.

$$K = \frac{mesure}{référence}$$

De la sorte on a accès à une valeur totalement indépendante des variations des températures et, par conséquent, reflètant exclusivement le paramètre qu'on désire mesurer. Avantageusement, comme indiqué plus haut, le capteur magnétique est un capteur magnéto-résistif qui délivre des signaux électriques variables en réponse à des variations de champs magnétiques et le générateur de champ magnétique de référence est un aimant permanent.

Dans une forme d'exécution avantageuse, le capteur est placé de telle sorte qu'il passe devant le générateur du champ magnétique à mesurer et derrière le générateur magnétique de référence, ou vice-versa, de façon à inverser en alternance les polarités des signaux délivrés par ce capteur, par rapport à une ligne de zéro.

L'intensité des signaux délivrés par le capteur est alors mesurée en crête à l'aide d'un bloqueur et, pour des raisons de commodité et de fiabilité, on situe la valeur de "zéro" du capteur, correspondant à l'absence de signal, à une valeur non nulle. Cette valeur est par exemple représentée par une tension positive, ce qui permet de placer toutes les variations du signal dans la gamme positive.

L'invention sera mieux comprise en référence au dessin annexé, donné à titre d'exemple non limitatif. Dans ce dessin:

—la figure 1 est une illustration du signal délivré par le capteur passant alternativement devant le champ magnétique à mesurer, puis devant un aimant de référence,

—la figure 2 correspond à la figure 1, le capteur étant situé dans une ambiance dont la température est supérieure à celle de la figure 1,

—la figure 3 correspond à la figure 1, le capteur étant placé à la même température, mais subissant un champ magnétique différent et,

—la figure 4 montre un enregistrement réel.

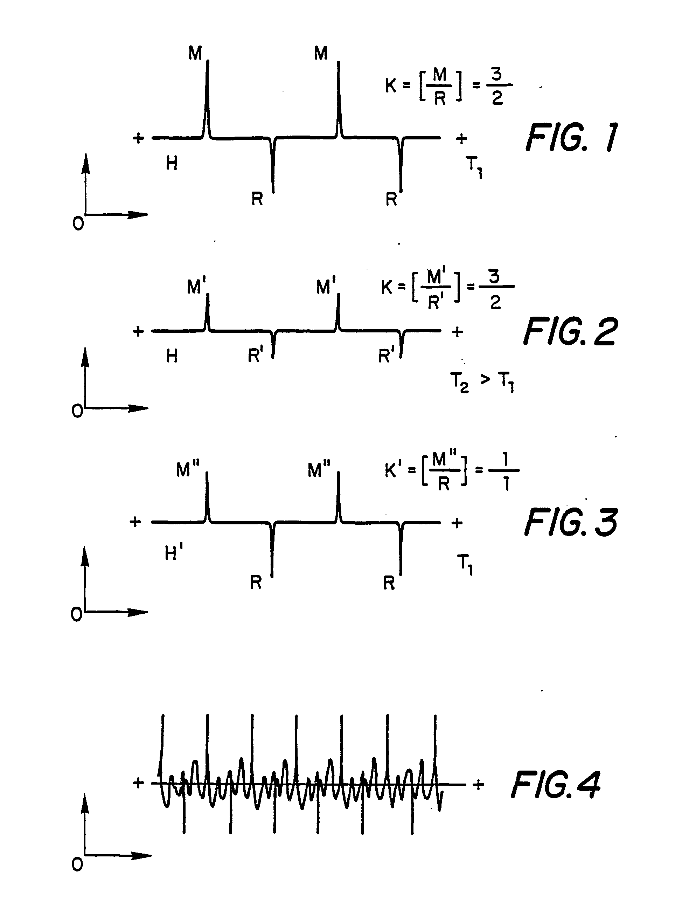

La figure 1 est une illustration de la forme d'exécution où la polarité des signaux est inversée, ce qui est un moyen commode de différenciée la mesure M du signal de référence R. L'émetteur de champ variable et l'aimant de référence sont disposés sur un plateau tournant qui, comme illustré, sont décalés d'un demitour.

Bien entendu, le décalage peut être choisi arbitrairement, d'une valeur quelconque, les signaux M et R n'étant plus alors équidistants dans le temps, qui s'écoule de gauche à droite. Dans cette figure également, on a représenté par H la valeur du champ magnétique agissant sur le capteur, par K le rapport des intensités de pics des mesures M et de référence R, telles que quantifiées en crête à l'aide d'un bloqueur. La température règnant autour du capteur est $T_1$ et les deux signes +, indiqués de part et d'autre de la ligne de "zéro" sont simplement destinés à indiquer que cette valeur de zéro n'est pas nulle, mais située à tension positive. Le zéro électrique réel est repéré dans le coin inférieur gauche de la figure.

Ajoutons encore que dans cette figure comme dans les figures suivantes, l'allure des enregistrements a été volontairement idéalisée pour aider à la compréhension. En réalité, la ligne de "zéro" entourée des signes + n'est pas une droite, mais une ligne hachée reflétant l'influence de signaux parasites divers, comme cela est illustré à la figure 4.

Sur cette figure 1, on remarquera que le rapport K=3/2 pour la température $T_1$.

Sur la figure 2, on a représenté un enregistrement pour une température $T_2 > T_1$. Les signaux délivrés par le capteur, soit M' pour un même champ magnétique H d'une part, et par le capteur passant devant l'aimant de référence, soit R', ont fortement varié, en diminution.

Expérimentalement, on constatera cependant que ce rapport est resté dans les proportions de 3/2. Le rapport K est donc le même, les variations de température n'ayant aucune influence sur lui.

Dans la figure 3, on s'est replacé dans la situation de la figure 1, c'est-à-dire à la température $T_1$, mais le champ magnétique est différent (H'≠H).

Le signal de référence R est resté celui de la figure 1, puisque l'aimant de référence n'a pas changé, mais la valeur M'' a été modifiée; ici, à des fins d'illustration le rapport K' a été choisi égal à 1/1.

On a donc la démonstration que:

—d'une part la température est sans influence sur la mesure K réalisée par le capteur,

—la mesure K réalisée par le capteur reflète la variation d'un autre paramètre, en l'occurrence la variation du champ magnétique.

En d'autres termes on a bien réalisé une compensation en température d'un capteur magnétique soumis à l'influence d'un champ magnétique variable.

On comprendra tout l'intérêt de cette compensation quand on saura que la variation du champ magnétique peut être simplement induite par le déplacement linéaire ou angulaire d'un aimant et que le signal est déjà modifié pour des déplacements de l'ordre de 1/10 de millimètre. On a donc là une mesure très précise de ce déplacement. Le capteur agit comme capteur de position, position qui peut à son tour être gouvernée par l'influence d'un autre paramètre. C'est donc cet autre paramètre qu'on pourra mesurer de façon très précise.

Signalons enfin que ce type de capteurs fonctionne dans une très large gamme de températures, par exemple dans sa zone de linéarité, notamment en −40°C et 150°C.

## Revendications

1. Procédé de compensation en température de la mesure réalisée par un capteur magnétique influencé par un champ magnétique passant cycliquement devant le capteur, caractérisé en ce qu'il consiste à faire le rapport deux à deux et consécutivement, des signaux délivrés par le capteur, respectivement lorsqu'il subit le champ à mesurer et par ce même capteur lorsqu'il subit un champ magnétique de référence, ce rapport (K) reflétant la mesure indépendamment des variations de température.

2. Procédé selon la revendication 1, caractérisé en ce que le capteur magnétique est un capteur magnéto-résistif délivrant des signaux électriques.

3. Procédé selon la revendication 1, caractérisé en ce que le générateur de champ magnétique de référence est un aimant permanent.

4. Procédé selon la revendication 1, 2 ou 3, caractérisé en ce que le capteur passe devant le générateur du champ magnétique à mesurer et derrière le générateur magnétique de référence, ou vice-versa, de façon à inverser en alternance les polarités des signaux délivrés par ce capteur.

5. Procédé selon la revendication 4, caractérisé en ce que l'intensité des signaux est mesurée en crête à l'aide d'un bloqueur.

## Patentansprüche

1. Verfahren zur Temperaturkompensation der Messung mit einem magnetischen Aufnehmer, der von einem vor dem Aufnehmer auftretenden zyklischen Magnetfeld beeinflußt ist, dadurch gekennzeichnet, daß paarweise und aufeinanderfolgend das Verhältnis von vom Aufnehmer gelieferter Signale gebildet wird, und zwar jeweils, wenn der Aufnehmer dem zu messenden Feld und wenn derselbe Aufnehmer einem magnetischen Bezugsfeld ausgesetzt wird, wobei durch dieses Verhältnis (K) die Messung unabhängig von den Temperaturschwankungen wiedergegeben wird.

2. Verfahren nach Anspruch 1, dadurch gekennzeichnet, daß der Magnetaufnehmer ein magnetoresistiver Aufnehmer ist, der elektrische Signale liefert.

3. Verfahren nach Anspruch 1, dadurch gekennzeichnet, daß der Generator des magnetischen Bezugsfeldes ein Dauermagnet ist.

4. Verfahren nach Anspruch 1, 2 oder 3, dadurch gekennzeichnet, daß der Aufnehmer vor dem Generator des zu messenden Feldes und hinter dem magnetischen Bezugsgenerator oder umgekehrt, vorbeigeführt wird, sodaß abwechselnd die Polaritäten der von diesem Aufnehmer gelieferten Signale umgekehrt werden.

5. Verfahren nach Anspruch 4, dadurch gekennzeichnet, daß die Intensität der Signale mit Hilfe einer Unterdrückungsschaltung am Maximum gemessen wird.

**Claims**

1. A method for the temperature compensation of a measurement taken by a magnetic sensor under the influence of a magnetic field passing cyclically in front of the sensor, characterised in that it consists in establishing the ratio, two-by-two and consecutively, of signals delivered by the sensor respectively when it is subjected to the field to be measured and when this same sensor is subjected to a reference magnetic field, this ratio (K) giving the measurement independently of variations of the temperature.

2. The method according to claim 1, characterised in that the magnetic sensor is a magnetoresistive sensor delivering electrical signals.

3. The method according to claim 1, characterised in that the generator of the reference magnetic field is a permanent magnet.

4. The method according to claim 1, 2 or 3, characterised in that the sensor passes in front of the generator of the magnetic field to be measured and behind the generator of the reference magnetic field, or vice-versa, in such a manner as to alternately invert the polarities of the signals delivered by this sensor.

5. The method according to claim 4, characterised in that the strength of the signals is measured by means of a peak sampler.

$$K = \left[\frac{M}{R}\right] = \frac{3}{2}$$

FIG. 1

$$K = \left[\frac{M'}{R'}\right] = \frac{3}{2}$$

$$T_2 > T_1$$

FIG. 2

$$K' = \left[\frac{M''}{R}\right] = \frac{1}{1}$$

FIG. 3

FIG. 4